Europäisches Patentamt

European Patent Office

Office européen des brevets

(19)

(11) Publication number: **0 232 043**
**A2**

# EUROPEAN PATENT APPLICATION

(12)

(21) Application number: **87300429.5**

(22) Date of filing: **19.01.87**

(51) Int. Cl.⁴: **H 04 L 25/49**

(30) Priority: **07.02.86 CA 501390**

(43) Date of publication of application:
**12.08.87 Bulletin 87/33**

(84) Designated Contracting States: **DE FR GB NL SE**

(71) Applicant: **NORTHERN TELECOM LIMITED**
**600 de la Gauchetiere Street West**
**Montreal Quebec H3B 4N7 (CA)**

(72) Inventor: **Carlton, Stephen Charles**
**3417 Foresthill Circle**
**Garland Texas (US)**

(74) Representative: **Crawford, Andrew Birkby et al**
**A.A. THORNTON & CO. Northumberland House 303-306**
**High Holborn**
**London WC1V 7LE (GB)**

(54) Scrambling data signals.

(57) A word-interleaved tdm data signal including a synchronizing word in each tdm frame is scrambled for transmission via a high speed fiber optic transmission link (14) by exclusive-or gating (26) each data word (16) with a respective word from a pseudo-random sequence word generator (10). In response to each synchronizing word the pseudo-random sequence generator is reset (22) to produce an all-zeroes word which is gated with the synchronizing word which is unchanged thereby. This facilitates detection of the synchronizing word at a descrambler (12) which operates in a similar manner. The scrambled data is converted by a multiplexer into a serial bit stream. which at the descrambler is demultiplexed and word-aligned using a barrel shifter controlled from a frame find circuit (30) of the descrambler.

EP 0 232 043 A2

**Description**

SCRAMBLING DATA SIGNALS

This invention relates to the scrambling of digital signals.

It is known to scramble a digital signal, prior to transmission of the signal, in order to facilitate clock recovery from the transmitted signal and to reduce concentrations of signal energy at particular frequencies. In particular, scrambling is used to break up periodically recurring patterns in a digital signal to be transmitted, and to provide transitions in the transmitted signal which are not present in the original signal. It is also known to unscramble a signal received at a receiver using a descrambling process which is the inverse of the scrambling process used prior to transmission of the signal.

Scrambling can be effected by inserting additional bits in the digital signal to be transmitted, for example to break up strings of consecutive bits of the same value as in zero code suppression techniques. This has the disadvantages of being relatively complicated to implement and of increasing the transmission rate at which the scrambled signal must be transmitted. The latter disadvantage is particularly significant for high speed digital signals, for example having speeds which may already be greater than 1Gb/s.

Scrambling can also be effected by gating the digital signal to be transmitted with a keying signal, which is generated at the same rate, in an Exclusive-OR gate, and transmitting the gated signal. The original signal can be recovered at the receiver by gating the received signal in another Exclusive-OR gate with the same keying signal. Such a scrambling technique is described for example in Fracassi et al. U.S. Patent No. 4,304,962 issued December 8, 1981 and entitled "Data Scrambler".

A problem with scrambling in the above manner is that the digital signal is continuously scrambled, regardless of its content. If the digital signal includes, for example, a synchronizing word which is used to identify time division multiplex frames in the digital signal, then this synchronizing word is scrambled as part of the data. Consequently, detection of the synchronizing word and synchronization of the receiver is rendered difficult by the scrambling process.

An object of this invention, therefore, is to provide an improved method of scrambling a digital signal, and to provide apparatus for carrying out this method.

According to one aspect of this invention there is provided a method of processing word-interleaved time division multiplexed data including a periodically-occurring synchronizing word, comprising the steps of: generating words in a pseudo-random sequence; starting the pseudo-random sequence in response to each periodic occurrence of the synchronizing word; and scrambling data words in dependence upon the words in the pseudo-random sequence.

Advantageously the pseudo-random sequence is started with a word of all zero bits and the data is scrambled by an exclusive-or combination of the data with the pseudo-random sequence, the synchronizing word being combined in an exclusive-or operation with said word of all zero bits whereby it remains unscrambled.

According to another aspect this invention provides a method of transmitting word-interleaved time division multiplexed data including a periodically-occurring synchronizing word, comprising the steps of scrambling the data in the above manner and transmitting the scrambled data.

The method preferably includes the step of detecting each periodic occurrence of the synchronizing word. This step may, however, be unnecessary as the location of the synchronizing word may already be known.

The invention also extends to a method of communicating word-interleaved time division multiplexed data including a periodically-occurring synchronizing word, comprising the steps of transmitting said data via a transmission link by the method recited above and, at a receiving end of the transmission link: detecting the periodic occurrences of the synchronizing word in data received via the transmission link; generating words in the same pseudo-random sequence as at the transmitting end of the transmission link; starting the pseudo-random sequence in response to each detected periodic occurrence of the synchronizing word; and unscrambling the data received via the transmission link by combining each received data word with a respective word of the pseudo-random sequence in an exclusive-or operation.

The scrambled data words are conveniently transmitted bit serially, for example over a fiber optic transmission link.

The invention further provides apparatus for scrambling words of a time division multiplexed data signal which includes a periodically-occurring synchronizing word, comprising: first means for generating words in a pseudo-random sequence; second means for resetting the first means to produce a predetermined word in the pseudo-random sequence in response to each periodic occurrence of the synchronizing word in the data signal; and exclusive-or gating means for gating each word of the data signal with a respective word of the pseudo-random sequence, each periodically-occurring synchronizing word being gated with said predetermined word in the pseudo-random sequence.

In a preferred form of this apparatus, the first means is responsive to the resetting by the second means to produce a word comprising only binary zero bits as said predetermined word, whereby the periodically-occurring synchronizing word is unchanged by the gating means.

The invention also provides apparatus for descrambling words of a time division multiplexed data signal scrambled by the apparatus recited above, comprising: generating means for generating words in said pseudo-random sequence; detection means for detecting the periodically-occurring synchronizing word in the data signal and for resetting the generating means to produce said predetermined word in response to such detection; and exclusive-or gating means for gating each word of the scrambled data signal with a respective word of the pseudo-random sequence from the generating means to produce descrambled words of the data signal.

Preferably the detection means is arranged to detect the periodically-occurring synchronizing word in the descrambled data signal produced by the exclusive-or gating means. However, as the synchronizing word is unchanged by the scrambling process, it could alternatively be detected in the scrambled data signal prior to the descrambling exclusive-or gating means. Even if the synchronizing word were scrambled in the data scrambling process by an exclusive-or operation with a predetermined non-zero word of the pseudo-random sequence, this would result in a predetermined scrambled word appearing in the scrambled data stream which could still be detected before the descrambling exclusive-or gating means.

The scrambling apparatus preferably includes means for converting the scrambled data words produced at the output of its gating means into a serial bit stream for transmission. In this case the descrambling apparatus preferably further comprises means for converting such a serial bit stream into the scrambled data signal words, the means for converting being responsive to the detection means failing to detect the periodically-occurring synchronizing word to effect realignment of bits of the serial bit stream into the scrambled data signal words.

The invention will be further understood from the following description with reference to the accompanying drawings, in which:

Fig. 1 is a block diagram illustrating the principles of operation of a scrambler and a descrambler in accordance with an embodiment of the invention;

Fig. 2 is a block diagram illustrating a multiplexer in accordance with an embodiment of the invention; and

Fig. 3 is a block diagram illustrating a demultiplexer in accordance with an embodiment of the invention.

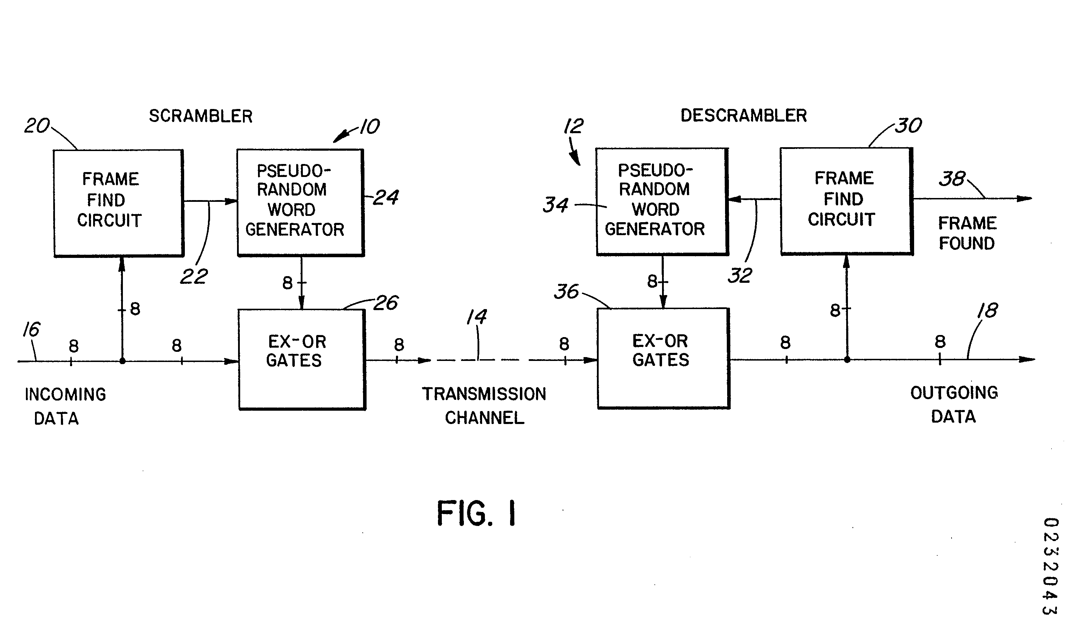

Referring to Fig. 1, there is illustrated a transmission arrangement showing parts of a scrambler 10 and a descrambler 12 which are coupled via a transmission channel 14. For clarity and simplicity, multiplexing and demultiplexing equipment which would normally be provided in such a transmission arrangement is not shown in Fig. 1, and accordingly the transmission channel 14 is illustrated as being an 8-bit wide channel. Similarly, an incoming data path 16, via which incoming data is supplied to the scrambler 10, and an outgoing data path 18, via which data is derived from the descrambler 12, are each illustrated as being 8 bits wide.

The incoming data on the path 16 comprises 8-bit words which are synchronously multiplexed in t.d.m. (time division multiplex) frames with an 8-bit synchronizing word which identifies the frame timing. A frame find circuit 20 in the scrambler 10 is coupled to the incoming data path 16 and serves in known manner to detect the synchronizing word and, using known confidence techniques if the synchronizing word is not unique but may also occur in the data, establish the frame timing. The frame find circuit 20 produces an output signal on a line 22 on the occurrence of each synchronizing word when the frame timing has been established.

The scrambler 10 also includes a pseudo-random word generator 24 and eight exclusive-or gates 26 which are not shown individually. The generator 24 generates 8-bit words in a pseudo-random sequence, at the same rate as the incoming data rate, and these are gated with the incoming data words on the path 16 by the gates 26 to produce 8-bit scrambled data words which are supplied to the transmission channel 14. The output signal of the circuit 20 on the line 22, produced on the occurrence of each synchronizing word on the data path 16, is used to reset the pseudo-random word generator 24 to produce an all-zeroes output word. The gating of this all-zeroes word with the synchronizing word in the gates 26 has no effect on the synchronizing word, whereby it is transmitted in its original form whereby it can be easily detected at the descrambler 12. Between successive synchronizing words the pseudo-random word generator 24 generates, in a pseudo-random sequence, words which are not all zeroes and which accordingly effect scrambling of the data on the path 16.

The descrambler 12 correspondingly includes a frame find circuit 30, a pseudo-random word generator 34 which is identical to the generator 24, and eight exclusive-or gates 36 which are not illustrated individually. The 8-bit words from the transmission channel 14 are gated in the gates 36 with the 8-bit words produced by the pseudo-random word generator 34 to produce 8-bit words on the outgoing data path 18. The frame find circuit 30 serves to detect the synchronizing word on the path 18 and to establish frame timing in a similar manner to the circuit 20.

Until it has established the frame timing, and thereafter on the occurrence of each synchronizing word on the path 18, the frame find circuit 30 supplies on a line 32 an output signal which resets the pseudo-random word generator 34 to produce an all-zeroes output word, which does not change the data passing through the gates 36 from the transmission channel 14 to the outgoing data path 18. Thus each synchronizing word is passed unchanged to the path 18 so that it is readily detected by the frame find circuit 30. When the circuit 30 has established the frame timing it supplies on a line 38 a frame found signal to indicate to subsequent circuitry that the outgoing data on the path 18 is valid, and between successive synchronizing words the pseudo-random word generator 34 generates, in the same sequence as the generator 24, words which effect proper descrambling of the data in the gates 36.

In order to generate the 8-bit words in a pseudo-random sequence in the manner described above, including an all-zeroes word on the occurrence of each synchronizing word, each of the generators 24 and 34 conveniently comprises an 11-stage register the outputs of 8 stages of which are used to provide the 8-bit words of the pseudo-random sequence. On resetting the generator in response to the output signal of the respective frame find circuit, these 8 stages can be reset to provide zero outputs and the remaining 3 stages can be set to provide non-zero outputs, whereby a stopped state of the generator is avoided. The generator can conveniently operate in accordance with the techniques described in the paper entitled "Series-parallel generation of m-sequences" by John J. O'Reilly published by The Institution of Electronic and Radio Engineers, 1975.

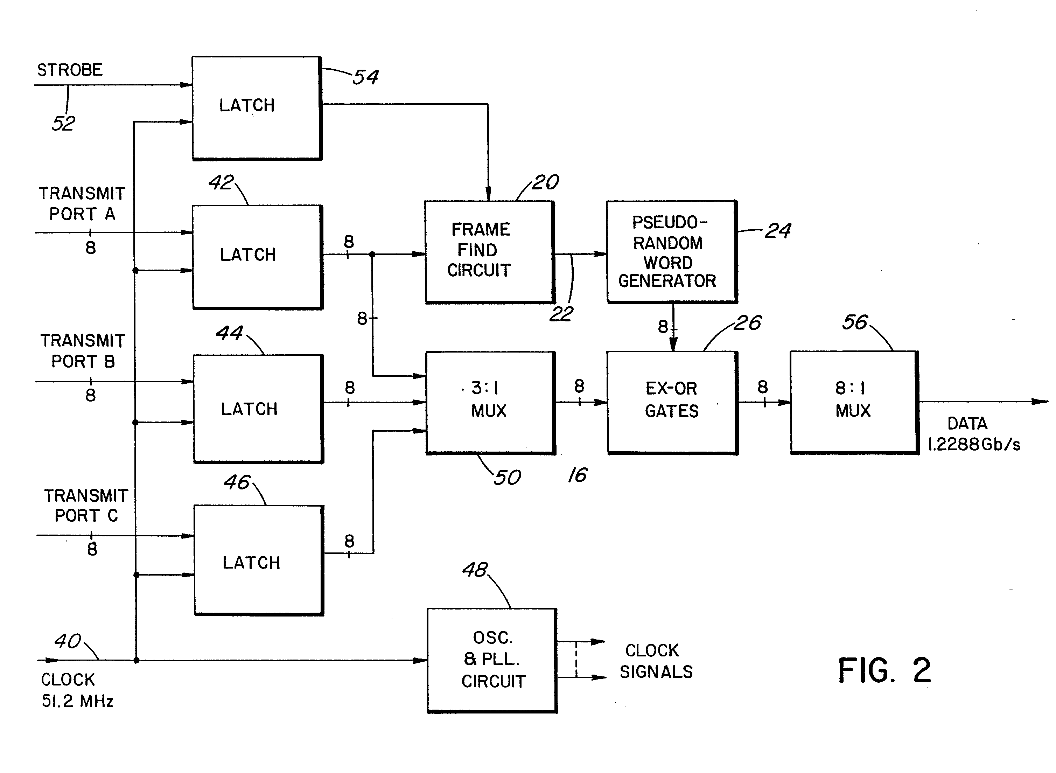

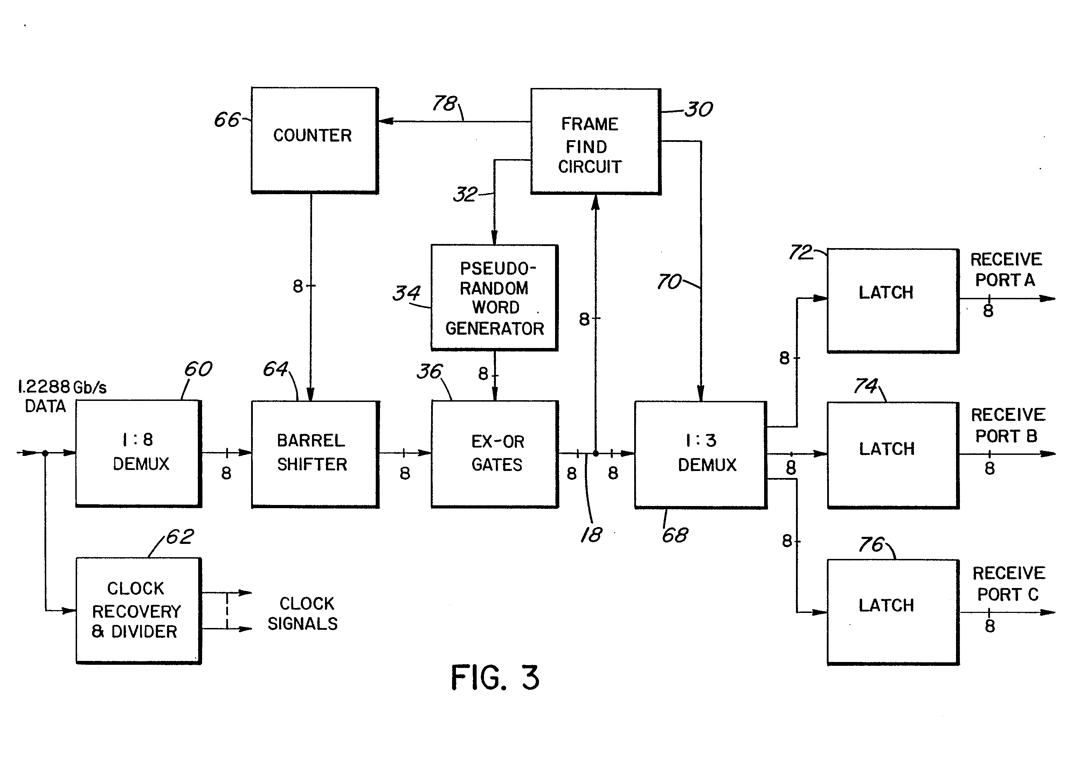

In Figs. 2 and 3, the same references as in Fig. 1 are used to denote corresponding parts. Thus the multiplexer of Fig. 2 includes the circuit 20, generator 24, and gates 26 of the scrambler 10, and the demultiplexer of Fig. 3 includes the circuit 30, generator 34, and gates 36 of the descrambler 12.

The multiplexer of Fig. 2 serves to multiplex 8-bit wide data words incoming at a rate of 51.2MHz from 3 transmit ports A, B, and C into an 8-bit wide data stream at 153.6MHz on the data path 16, scramble this in the manner described above, and convert the scrambled data stream into a 1.2288Gb/s single bit stream for transmission via a fiber optic transmission link. The demultiplexer of Fig. 3 serves to demultiplex and descramble the 1.2288Gb/s bit stream, after such transmission, to reproduce 3 8-bit wide data streams at 51.2MHz for supply to respective receive ports A, B, and C.

Referring to Fig. 2, the incoming 8-bit data words from each of the transmit ports A, B, and C are latched under the control of an incoming 51.2MHz clock signal on a line 40 into 8-bit wide latches 42, 44, and 46 respectively. The clock signal on the line 40 is also supplied to an oscillator and phase-locked loop circuit 48 which generates clock signals at integral multiples of 51.2MHz for the remainder of the multiplexer. The outputs of the latches 42, 44, and 46 are multiplexed in a word-interleaved manner by a 3:1 multiplexer 50 to produce the 8-bit words at 153.6MHz on the data path 16.

The data words incoming at 51.2MHz at each transmit port comprise sequential words of synchronously-multiplexed word-interleaved channels in t.d.m. frames having a period of 125 microseconds. For example, 25 64kb/s data channels are synchronously multiplexed to form a tributary having a bit rate of 1.6Mb/s, or a word rate (for 8-bit words) of 200 kHz. 32 such tributaries are synchronously multiplexed on a word-interleaved basis to provide a frame of 8-bit wide words at 6.4MHz. 8 such frames are synchronously multiplexed on a word-interleaved basis to provide the incoming data word rate of 51.2MHz at each port.

One of the 8 frames, containing a synchronizing or frame alignment word, is identified by a strobe signal which is supplied on a line 52 and is latched in a latch 54 under the control of the clock signal on the line 40. For example, the strobe signal is a binary zero in one of every eight cycles of the 51.2MHz clock signal, corresponding to a particular one of the 8 synchronously multiplexed frames referred to above, and is otherwise a binary one.

The frame find circuit 20 serves in this embodiment to detect the synchronizing or frame alignment words in the data stream incoming at the transmit port A, and accordingly the 8-bit output of the latch 42 for this data stream, and the output of the latch 54 indicating which one of the 8 frames thereof contains these words, are supplied to the circuit 20. The circuit 20 detects occurrences of the synchronizing word at the output of the latch 42 when the latched strobe signal is zero to establish frame timing for the transmit port A, and controls the pseudo-random word generator 24 accordingly in the manner already described above. The 8-bit wide scrambled data words produced at the output of the gates 26 are converted by an 8:1 multiplexer 56 into the 1.2288Gb/s single bit stream for transmission.

Referring now to Fig. 3, in the demultiplexer the 1.2288Gb/s serial bit stream incoming from the transmission link is supplied to a 1:8 demultiplexer or serial-to-parallel converter 60, where it is converted into an 8-bit wide data stream at a rate of 153.6MHz, and to a clock recovery and frequency divider circuit 62 which produces clock signals at 153.6MHz and 51.2MHz for the remainder of the demultiplexer. The demultiplexer 60 is conveniently of the form described and claimed in my copending Canadian patent application No. filed on and entitled "Serial-to-Parallel Converter for High-Speed Bit Streams".

The output of the demultiplexer 60 is connected to the input of a barrel shifter 64, whose output is connected to the gates 36 of the descrambler. The barrel shifter 64 includes a 16-bit latch (not shown separately), for two consecutive 8-bit sequences, and serves in known manner to supply to its 8-bit output any 8 consecutive bits from the 16 bit latch thereby to effect word alignment of the 8 bits supplied to the gates 36. In other words the barrel shifter 64 serves to ensure that the 8 bits of data presented to the gates 36 are 8 bits of one word, rather than n (n = 1 to 7) bits of one word and 8-n bits of an adjacent word. To this end the barrel shifter 64 is controlled by the 3-bit output of a modulo-8 counter 66 which is incremented in the manner described below, the 8 states of the counter corresponding to the eight different ways of selecting 8 consecutive bits from the 16-bit latch.

The data path 18 output of the gates 36 is supplied to a 1:3 demultiplexer 68, the distribution of data words by this demultiplexer to its three outputs being synchronized via a line 70 by the frame find circuit 30 when this has established the frame timing of the data which originated from the transmit port A from the synchronizing words therein. The 8-bit words output from the demultiplexer 68 are latched in respective 8-bit wide latches 72, 74, and 76 under the control of a 51.2MHz clock signal supplied by the circuit 62, for supply to the receive ports A, B, and C respectively.

Descrambling is effected in the demultiplexer of Fig. 3 in the same manner as described with reference to Fig. 1. Initially the frame find circuit 30 maintains the generator 34 reset so that its output is an all-zeroes word, so that the 8-bit output of the barrel shifter is passed unchanged via the gates 36. The frame find circuit 30 detects occurrences of the synchronizing or frame alignment word in the resultant data on the path 18, and seeks to establish frame timing of this data using confidence techniques. For example, the circuit 30 may require detection of this word in four consecutive frames before it determines that it has correctly established the frame timing.

If the 8-bit output of the barrel shifter 64 is not word-aligned, then the circuit 30 will be unable to establish frame timing. In this case a timer in the frame find circuit 30 expires, the timer having been started at the start of the frame find process, and via a lead 78 the circuit 30 increments the counter 66 to change the phase of the data passed from the input to the output of the barrel shifter 64. The timer is restarted and the frame find process is continued with the new phase of the data. This sequence continues until the data at the output of the barrel shifter 64 is word-aligned, in which case the frame find circuit 30 is able to establish the frame timing, whereupon it disables the timer and controls the pseudo-random word generator 34 to effect descrambling in the manner already described.

It should be understood that numerous modifications, variations, and adaptations may be made to the particular embodiment of the invention described above without departing from the scope of the invention as defined in the claims.

## Claims

1. A method of processing word-interleaved time division multiplexed data including a periodically-occurring synchronizing word, comprising the steps of:
generating words in a pseudo-random sequence;
starting the pseudo-random sequence in response to each periodic occurrence of the synchronizing word; and
scrambling data words in dependence upon the words in the pseudo-random sequence.

2. A method as claimed in claim 1 and including the step of detecting each periodic occurrence of the synchronizing word.

3. A method as claimed in claim 1 or 2 wherein the pseudo-random sequence is started with a word of all zero bits and each data word is scrambled by an exclusive-or combination of the data with a respective word in the pseudo-random sequence, the synchronizing word thereby being combined in an exclusive-or operation with said word of all zero bits whereby it remains unscrambled.

4. A method of transmitting word-interleaved time division multiplexed data including a periodically-occurring synchronizing word, comprising the steps of:
scrambling the data by the method of claim 1, 2 or 3; and
transmitting the scrambled data.

5. A method of communicating word-interleaved time division multiplexed data including a periodically-occurring synchronizing word, comprising the steps of transmitting said data via a transmission link by the method of claim 4 and, at a receiving end of the transmission link:
detecting the periodic occurrences of the synchronizing word in data received via the transmission link;
generating words in the same pseudo-random sequence as at the transmitting end of the transmission link;
starting the pseudo-random sequence in response to each detected periodic occurrence of the synchronizing word; and
unscrambling the data received via the transmission link by combining each received data word with a respective word of the pseudo-random sequence in an exclusive-or operation.

6. A method as claimed in claim 5 wherein the scrambled data words are transmitted bit serially via the transmission link.

7. Apparatus for scrambling words of a time division multiplexed data signal which includes a periodically-occurring synchronizing word, comprising:
first means for generating words in a pseudo-random sequence;
second means for resetting the first means to produce a predetermined word in the pseudo-random sequence in response to each periodic occurrence of the synchronizing word in the data signal; and
exclusive-or gating means for gating each word of the data signal with a respective word of the pseudo-random sequence, each periodically-occurring synchronizing word being gated with said predetermined word in the pseudo-random sequence.

8. Apparatus as claimed in claim 7 wherein the second means comprises means for detecting the periodically-occurring synchronizing word in the data signal.

9. Apparatus as claimed in claim 7 or 8 and including means for converting the output of the gating means into a serial bit stream.

10. Apparatus as claimed in claim 7, 8, or 9 wherein the first means is responsive to the resetting by the second means to produce a word comprising only binary zero bits as said predetermined word, whereby the periodically-occurring synchronizing word is unchanged by the gating means.

11. Apparatus for descrambling words of a time division multiplexed data signal scrambled by the apparatus of claim 10, comprising:
generating means for generating words in said pseudo-random sequence;
detection means for detecting the periodically-occurring synchronizing word in the data signal and for resetting the generating means to produce said predetermined word in response to such detection; and

**0 232 043**

exclusive-or gating means for gating each word of the scrambled data signal with a respective word of the pseudo-random sequence from the generating means to produce descrambled words of the data signal.

12. Apparatus as claimed in claim 11 wherein the detection means is arranged to detect the periodically-occurring synchronizing word in the descrambled data signal produced by the exclusive-or gating means.

13. Apparatus as claimed in claim 11 or 12 for descrambling words of a time division multiplexed data signal scrambled by the apparatus of claim 9. the apparatus further comprising means for converting a serial bit stream into the scrambled data signal words, the means for converting being responsive to the detection means failing to detect the periodically-occurring synchronizing word to effect realignment of bits of the serial bit stream into the scrambled data signal words.

FIG. 1

FIG. 2

FIG. 3